# EUROPÄISCHE PATENTANMELDUNG

(11) **EP 4 382 782 A2**
(43) Veröffentlichungstag der Anmeldung: **12.06.2024**
(21) Anmeldenummer: 23214163.0
(22) Anmeldetag: 05.12.2023
(51) Int. Cl.: F16K 7/06, F16K 7/07, F16K 27/02, F16K 31/122, F16K 31/50

(54) **QUETSCHVENTIL SOWIE VERFAHREN ZUR HERSTELLUNG EINES QUETSCHVENTILS**

(30) Priorität: 07.12.2022 DE 102022132587
(71) Anmelder: AKO Armaturen & Separationstechnik GmbH, 65468 Trebur-Astheim (DE)
(72) Erfinder: Kopp, Frederic, 55130 Mainz (DE)
(74) Vertreter: WSL Patentanwälte Partnerschaft mbB

(57) **Zusammenfassung**

Quetschventil (1) mit einem Ventilgehäuse (2), wobei das Ventilgehäuse (2) einen Ventileinlass (3) und einen Ventilauslass (4) sowie eine zwischen dem Ventileinlass (3) und dem Ventilauslass (4) angeordnete Schlauchmanschette (5) aufweist, wobei die Schlauchmanschette (5) mit dem Ventileinlass (3) und dem Ventilauslass (4) verbunden ist und einen Ventilkanal (6) bildet, der in einer Förderrichtung (100) von einem Fördermedium durchflossen werden kann, wobei das Quetschventil (1) weiter einen in einer Schließrichtung (101) zwischen einer Öffnungsposition und einer Schließposition hin und her bewegbaren Manschettendrücker (7) aufweist, wobei der Manschettendrücker (7) zumindest in der Schließposition derart in Kontakt mit der Schlauchmanschette (5) steht, dass mit dem Manschettendrücker (7) in der Schließrichtung eine Schließkraft auf die Schlauchmanschette (5) ausgeübt wird, sodass ein Kanalquerschnitt des Ventilkanals (6) senkrecht zu der Förderrichtung (100) zwischen dem Ventileinlass (3) und dem Ventilauslass (4) verringerbar und/oder verschließbar ist, dadurch gekennzeichnet, dass die Schlauchmanschette (5) zumindest zwei Materiallagen aufweist, zwischen denen ein erstes textiles Flächengebilde, vorzugsweise ein Gewebe, angeordnet ist.

## Beschreibung

Die vorliegende Erfindung betrifft ein Quetschventil sowie ein Verfahren zur Herstellung eines Quetschventils. Ventile dienen im Allgemeinen dem zeitweiligen Abschließen oder Drosseln eines Fördermediums bzw. Produktstromes. Diese Produktströme, die beispielsweise aus Gasen, Stäuben, Flüssigkeiten, Feststoffen oder Suspensionen und anderen Materialien bestehen können, durchströmen das Ventil in einer Förderrichtung, wenn das Ventil geöffnet ist. Im Vergleich zu den meisten anderen Ventiltypen bieten Quetschventile den Vorteil, dass diese auch eine vollkommene Abdichtung beim Absperren eines Produktstromes bieten, welcher aus festen Bestandteilen wie zum Beispiel Granulaten, Pulvern oder Pasten besteht.

Im Allgemeinen weisen Quetschventile ein Ventilgehäuse auf, das einen Ventileinlass und einen Ventilauslass sowie eine zwischen dem Ventileinlass und dem Ventilauslass angeordnete Schlauchmanschette aufweist. Dabei ist die Schlauchmanschette mit dem Ventileinlass und dem Ventilauslass verbunden, sodass ein Ventilkanal gebildet wird, der in der Förderrichtung von einem Fördermedium durchflossen werden kann.

Um den Strom des Fördermediums zu unterbrechen, weisen einige Schlauchquetschventile weiter einen in einer Schließrichtung zwischen einer Öffnungspositionen und einer Schließposition hin und her bewegbaren Manschettendrücker auf, wobei der Manschettendrücker zumindest in der Schließposition derart in Kontakt mit der Schlauchmanschette steht, dass mit dem Manschettendrücker in der Schließrichtung eine Schließkraft auf die Schlauchmanschette ausgeübt wird. Dadurch wird ein Kanalquerschnitt des Ventilkanals senkrecht zu der Förderrichtung zwischen dem Ventileinlass und dem Ventilauslass verringert und/oder verschlossen, sodass das Fördermedium das Quetschventil in verringertem Maße oder gar nicht mehr passieren kann. Es gibt auch Schlauchquetschventile mit einem die Schlauchmanschette umgebenden Steuerraum, der mit Druckluft beaufschlagt werden kann, um die Schlauchmanschette zusammenzudrücken. In diesem Fall kann auf den Manschettendrücker verzichtet werden. Solche Schlauchquetschventile sind jedoch nicht für alle Arten von Produktströmen geeignet.

Die Schließkraft, die für die Schließung des Quetschventils mithilfe des Manschettendrückers aufgewendet werden muss, hängt einerseits von dem zu fördernden Medium sowie dem Betriebsdruck und andererseits von dem Material und Aufbau der Schlauchmanschette sowie des Manschettendrückers ab.

Insbesondere, wenn ein Fördermedium mit festen Bestandteilen gefördert werden soll, ist die Schließkraft, die der Manschettendrücker auf die Schlauchmanschette ausüben muss, entsprechend hoch. Es ist daher wünschenswert, die inhärente Schließkraft, die von dem Manschettendrücker auf die Schlauchmanschette ausgeübt wird, wenn kein Fördermedium in dem Quetschventil gefördert wird, so gering wie möglich zu halten. Des Weiteren ist eine möglichst geringe inhärente Schließkraft auch aus wirtschaftlichen Gründen vorteilhaft, da die Herstellungskosten und auch die Betriebskosten eines Antriebes für den Manschettendrücker steigen, je mehr Kraft von dem Antrieb aufgebracht werden muss.

Aus dem Stand der Technik sind verschiedene Lösungen für eine effizientere Verschließbarkeit bekannt. Eine Lösung besteht beispielsweise darin, dass gegenüberliegend zu dem Manschettendrücker in dem Ventilgehäuse eine Erhebung vorgesehen ist, welche dauerhaft den Querschnitt des Ventilkanals verjüngt. Durch diese Maßnahme wird der Weg des Manschettendrückers bis zur Schließposition verringert. Eine solche Ausgestaltung hat jedoch den Nachteil, dass aufgrund der konstanten Querschnittsreduktion die Förderung des Fördermediums in Bereich der Erhebung dauerhaft beeinträchtigt wird. Es kann zu einem Festsetzen des Fördermediums und einer damit einhergehenden Reduktion des Förderstroms kommen.

Der vorliegenden Erfindung liegt daher die Aufgabe zugrunde, ein Quetschventil bzw. ein Verfahren zur Herstellung eines Quetschventils bereitzustellen, welches im Vergleich zu aus dem Stand der Technik bekannten Quetschventilen eine verringerte Schließkraft aufweist ohne eine dauerhafte Verjüngung des Kanalquerschnitts zu nutzen.

Die der Erfindung zugrunde liegende Aufgabe wird durch ein Quetschventil der eingangs genannten Art gelöst, wobei die Schlauchmanschette zumindest zwei Materiallagen aufweist, zwischen denen ein erstes textiles Flächengebilde, vorzugsweise ein Gewebe, angeordnet ist.

Durch die Anordnung des ersten textilen Flächengebildes zwischen den Materiallagen der Schlauchmanschette können die Materiallagen mit einer geringeren Materialstärke ausgeführt werden, da das erste textile Flächengebilde die Stabilität der Schlauchmanschette erhöht. Durch die Reduktion der Materialstärken muss mit dem Manschettendrücker letztlich weniger Kraft zur Verringerung des Kanalquerschnitts aufgewendet werden, da die Gegenkraft der Schlauchmanschette geringer ausfällt.

Erfindungsgemäß ist die Schlauchmanschette aus mindestens zwei Materiallagen aufgebaut. Dabei wird eine innere Materiallage, welche im direkten Kontakt mit dem Fördermedium steht, als Seele bezeichnet, während eine äußere Materiallage, die nicht unmittelbar in Kontakt mit dem Fördermedium steht, als Decke bezeichnet wird.

In einer Ausführungsform ist die Materialstärke der inneren Materiallage, d.h. der Seele, geringer als die Materialstärke der äußeren Materiallage. Die äußere Materiallage der Schlauchmanschette, die sogenannte Decke, nimmt damit den größeren Anteil der gesamten Wandstärke der Schlauchmanschette ein.

Die innenliegende Materiallage (Seele) ist insbesondere aus einem Elastomer gefertigt, welches entweder eine sehr gute chemische Kompatibilität zu dem Fördermedium aufweist oder im Fall, dass keine chemische Kompatibilität gefordert ist, eine hohe Abriebfestigkeit aufweist, um einen frühzeitigen Verschleiß durch Abrasion zu vermeiden. Typische Materialien der innenliegenden Materiallage sind beispielsweise Nitrilgummi, Chloropren-Kautschuk, chlorsulfoniertes Polyethylen, Butylkautschuk, Fluorelastomer, Fluorkautschuk oder Silikon. Die innere Materiallage trägt damit im Wesentlichen zu der chemischen Beständigkeit der Schlauchmanschette bei.

Die äußere Materiallage trägt maßgeblich zu der Funktion der Schlauchmanschette bei und ist in einer Ausführungsform ebenfalls aus einem Elastomer gefertigt. Das Elastomer wird dabei so gewählt, dass sich die äußere Materiallage ausreichend elastisch ist und damit eine ausreichende Zugfestigkeit und Weiterreißfestigkeit aufweist, um eine möglichst lange Lebensdauer bei der permanent dynamischen Belastung durch den Manschettendrücker zu erzielen. Typische Materialien für die äußere Materiallage sind beispielsweise Naturkautschuk oder Ethylen-Propylen-Dien-Kautschuk (EPDM).

Die Elastizität der erfindungsgemäßen Schlauchmanschette führt dazu, dass mit der erfindungsgemäßen Schlauchmanschette gänzlich auf eine direkte Verbindung des Manschettendrückers zu der Schlauchmanschette verzichtet werden kann, da sich die Schlauchmanschette nach Öffnen des Manschettendrückers wieder zu einem kreisrunden Querschnitt öffnet und das Fördermedium wieder ungehindert fließen kann.

Je nach Betriebsbedingungen, unter welchen das erfindungsgemäße Quetschventil betrieben wird, kann ein zusätzliches Aufziehen der Schlauchmanschette mit einer Manschettenaufzieheinheit entfallen. Die Betriebsbedingungen, die das Öffnungsverhalten der Schlauchmanschette maßgeblich bedingen, sind dabei vor allem die herrschenden Umgebungstemperaturen, die Temperatur oder andere Eigenschaften des Fördergutes an sich, welches das Quetschventil passiert, sowie die Druckverhältnisse in dem Ventilkanal und um das Quetschventil.

In einer Anwendung herrscht in dem Ventilkanal des erfindungsgemäßen Quetschventils beispielsweise ein Vakuum, um das Mischgut zu fördern. In diesem Falle ist eine Manschettenaufzieheinheit erforderlich, da die inhärente Rückstellkraft der Schlauchmanschette, nachdem der Manschettendrücker in die Öffnungsposition bewegt wurde, nicht ausreicht, um den Kanalquerschnitt wieder in seine ursprüngliche Größe zurückzuführen. Eine Manschettenaufzieheinheit kann aber auch bei anderen Anwendungen von Vorteil sein, wenn die inhärente Rückstellkraft der Schlauchmanschette nicht ausreicht, um wieder den vollen Öffnungsquerschnitt herzustellen.

In einer Ausführungsform weist das Quetschventil daher weiter eine Manschettenaufzieheinheit für die Schlauchmanschette auf, wobei das Ventilgehäuse gasdicht ausgestaltet ist, wobei die Manschettenaufzieheinheit derart ausgestaltet ist, dass mit der Manschettenaufzieheinheit in dem Ventilgehäuse ein Unterdruck erzeugbar ist, sodass die Schlauchmanschette gegen eine Gehäusewand des Ventilgehäuses gezogen und der Kanalquerschnitt vergrößert wird. Alternativ kann die Manschettenaufzieheinheit auch so ausgestaltet sein, dass mit der Manschettenaufzieheinheit ein Vakuum im dem Ventilgehäuse erzeugt werden kann, welches den Kräften aufgrund des Vakuums im Ventilkanal entgegenwirkt.

In einer Ausführungsform weist die Schlauchmanschette einen Zentralabschnitt und einen ersten und einen zweiten Endabschnitt auf, die in Förderrichtung hintereinander angeordnet sind. Dabei erstreckt sich das erste textile Flächengebilde nicht bis in den ersten Endabschnitt und vorzugsweise auch nicht bis in den zweiten Endabschnitt. Weiter ist eine Einspannvorrichtung mit zwei Einspannflächen vorgesehen, mit der die Schlauchmanschette an dem Ventileinlass und oder dem Ventilauslass derart befestigt ist, dass der erste Endabschnitt zwischen den zwei Einspannflächen geklemmt ist, wobei besonders bevorzugt der Zentralabschnitt nicht oder nur ein Randabschnitt des Zentralabschnitts zwischen den Einspannflächen geklemmt ist. Folglich erstreckt sich das erste textile Flächengebilde vorzugsweise nicht zwischen die zwei Einspannflächen der Einspannvorrichtung. Allenfalls ist nur ein kleiner Randbereich des ersten textilen Flächengebildes zwischen den Einspannflächen angeordnet. Dies erhöht die Flexibilität der erfindungsgemäßen Schlauchmanschette zusätzlich, reduziert die benötigte Schließkraft des Manschettendrückers bzw. des Antriebes und minimiert zugleich einen Kraftaufwand, der für das Montieren der Schlauchmanschette zwischen den Einspannflächen des Ventileinlasses bzw. -auslasses erforderlich ist.

Insbesondere weist die Einspannvorrichtung in einer Ausführungsform einen konusförmigen Abschnitt auf, wobei sich ein Durchmesser des konusförmigen Abschnitts zum Inneren des Ventilkanals hin verjüngt, wobei eine Außenfläche des konusförmigen Abschnitts eine erste Einspannfläche bildet, die mit der Förderrichtung einen Winkel von mindestens 10° und höchstens 35° einschließt und wobei der konusförmige Abschnitt derart ausgestaltet ist, dass der konusförmige Abschnitt eine Wand der Schlauchmanschette gegen eine zweite Einspannfläche, die in dem Ventilgehäuses angeordnet ist, drückt. Der beanspruchte Winkel des konusförmigen Abschnittes führt dazu, dass die Schlauchmanschette durch die Einspannvorrichtung nicht zu stark beansprucht wird. Des Weiteren führt der gewählte Winkel dazu, dass ein Wulst, der sich zwischen einer Konusspitze und der Schlauchmanschetten ausbildet, wenn ein zu großer Winkel gewählt wird, verhindert wird. Letztlich ist auch ein Absatz zwischen der Konusspitze und der Schlauchmanschette kleiner, wodurch sich weniger Fördergut absetzen und das erfindungsgemäße Quetschventil verunreinigen kann. Zusätzlich wird die Reinigung des erfindungsgemäßen Schlauchquetschventils erleichtert. Insbesondere kann die Reinigung des Schlauchquetschventils auch mit einem Molch, d.h. einem in der Schlauchmanschette bzw. einem in den verbundenen Rohrleitungen einsetzbaren Passkörper, erfolgen.

Besonders bevorzugt weist die Einspannvorrichtung weiter einen Anschlussabschnitt auf, über welchen der Ventilkanal des Quetschventils mit einer Versorgungsleitung verbunden werden kann. Hierzu weist der Anschlussabschnitt beispielsweise ein Innengewinde, Klemmstutzen, ein Rohrschweißende, einen Flansch oder andere Anschlüsse auf, die entsprechende Hygieneanforderungen erfüllen. Es versteht sich, dass Ventileinlass und Ventilauslass über unterschiedliche Anschlussabschnitte der Einspannvorrichtung mit Versorgungsleitungen verbunden sein können. Insbesondere sind in einer weiteren Ausführungsform der konusförmige Abschnitt und der Anschlussabschnitt einteilig ausgeführt, um das Einklemmen der Schlauchmanschette zu erleichtern und des Weiteren die Einspannvorrichtung wirtschaftlicher herzustellen.

In einer weiteren Ausführungsform weist die Schlauchmanschette zumindest eine erste, eine zweite und eine dritte Materiallage sowie ein zweites textiles Flächengebilde, vorzugsweise ein Gewebe, auf, wobei das erste textile Flächengebilde zwischen der zweiten und dritten Materiallage und das zweite textile Flächengebilde zwischen der ersten und zweiten Materiallage angeordnet ist, wobei vorzugsweise die erste Materiallage an den Ventilkanal angrenzt, die zweite Materiallage weiter entfernt von dem Ventilkanal angeordnet ist als die erste Materiallage und die dritte Materiallage weiter entfernt von dem Ventilkanal angeordnet ist als die zweite Materiallage. Mit anderen Worten ist entweder das vom Ventilkanal aus betrachtet innenliegende Flächengebilde nicht zwischen den Einspannflächen eingeklemmt oder das vom Ventilkanal aus betrachtet außenliegende Flächengebilde. Dies ermöglicht einerseits eine stabile Einspannung der Schlauchmanschette in dem Ventilgehäuse und andererseits eine ausreichende Flexibilität der Schlauchmanschette, da sich nicht jedes der textilen Flächengebilde bis zu der Einspannvorrichtung erstreckt. Das Vorsehen von zwei textilen Flächengebilden verbessert die Druckstabilität der Schlauchmanschette. Das von dem Ventilkanal aus betrachtet innenliegende textile Flächengebilde ist vorzugsweise zwischen den Einspannflächen eingeklemmt.

In einer weiteren Ausführungsform weist der Manschettendrücker senkrecht und/oder parallel zu der Förderrichtung einen Querschnitt auf, der sich in der Schließrichtung verjüngt. Damit trifft der Manschettendrücker zunächst nur mit einer kleineren Fläche auf die Schlauchmanschette. Wird der Manschettendrücker dann weiter in Schließrichtung bewegt, wölbt sich die Schlauchmanschette um den Manschettendrücker. Im Gegensatz zu einem Manschettendrücker, der über die volle Breite seines Querschnitts senkrecht auf die Schlauchmanschette drückt, kann so die Schließkraft verringert werden. Es wird so ein gleichmäßiger Anpressdruck durch den Manschettendrücker auf die Schlauchmanschette ausgeübt und die Schließkraft bleibt während des Schließvorgangs konstant. Letztlich benötigt ein Manschettendrücker mit einem verjüngenden Querschnitt auch weniger Platz in dem Ventilgehäuse, das erfindungsgemäße Quetschventil kann kompakter, leichter und kostengünstiger ausgestaltet werden. Des Weiteren kann der Strom des Fördermediums gezielter geregelt werden.

In einer weiteren Ausführungsform ist zudem das Ventilgehäuse an die Form des Manschettendrückers angepasst, sodass die Hohlräume zwischen einer Gehäusewand des Ventilgehäuses und der Schlauchmanschetten reduziert werden. Dies wiederum reduziert die Belastung der Schlauchmanschette, da eine Ausdehnung in die Hohlräume minimiert wird, sodass sich die Lebensdauer der Schlauchmanschette verlängert.

Insbesondere weist der Manschettendrücker senkrecht und/oder parallel zu der Förderrichtung zumindest abschnittsweise einen dreieckigen Querschnitt auf, wobei der dreieckige Querschnitt so orientiert ist, dass eine Kontaktspitze der drei Spitzen des dreckigen Querschnitts in Schließrichtung zeigt, wobei die Kontaktspitze vorzugsweise mit einem Radius abgerundet ist. Alternativ weißt die Kontaktspitze eine Kontaktfläche auf, die im Wesentlichen senkrecht zu der Schließrichtung orientiert ist und über jeweils eine Rundung in die Seitenflächen des dreieckigen Querschnitts übergeht.

Die Abrundung bzw. Abflachung der Kontaktspitze führt dazu, dass eine Beschädigung der Schlauchmanschette bei Kontakt mit dem Manschettendrücker reduziert wird. Zusätzlich führt der dreieckige Querschnitt dazu, dass die Schließkraft, die von dem Manschettendrücker auf die Schlauchmanschette ausgeübt wird, verringert ist, da die Seitenflächen des Manschettendrückers, die sich an die Kontaktspitze anschließen, unter einem Winkel kleiner 90° eine Schließkraft auf die Schlauchmanschette ausüben.

Weiter beträgt in einer Ausführungsform ein Radius Rₛ der Kontaktspitze des dreieckigen Querschnitts senkrecht zu der Förderrichtung mindestens 5 mm und höchstens 20 mm, vorzugsweise mindestens 7 mm und höchstens 18 mm und/oder wobei ein Radius Rₚ der Kontaktspitze des dreieckigen Querschnitts parallel zu der Förderrichtung mindestens 2 mm und höchstens 10 mm, vorzugsweise mindestens 3 mm und höchstens 7 mm beträgt. Der gewählte Radius führt dazu, dass das Quetschventil mit hinreichender Genauigkeit geschlossen werden kann und gleichzeitig die Schlauchmanschette auch bei wiederholten Schließvorgängen durch den Manschettendrücker möglichst wenig beschädigt wird.

In einer weiteren Ausführungsform ist ein Öffnungswinkel *α* an der Kontaktspitze des dreieckigen Querschnitts senkrecht zu der Förderrichtung mindestens 85° und höchstens 95°, und/oder wobei ein Öffnungswinkel β an der Kontaktspitze des dreieckigen Querschnitts parallel zu der Förderrichtung mindestens 35° und höchstens 65° beträgt. Auf diese Weise kann die Kraft, welche von den Seiten des Dreiecks auf die Schlauchmanschette ausgeübt wird, reguliert werden.

In einer weiteren Ausführungsform weist der Manschettendrücker senkrecht und parallel zu der Förderrichtung einen dreieckigen Querschnitt auf, wobei die Kontaktspitze des dreieckigen Querschnitts senkrecht zu der Förderrichtung ein Radius Rₛ aufweist, wobei die Kontaktspitze des dreieckigen Querschnitts parallel zu der Förderrichtung ein Radius Rₚ aufweist, wobei Rₛ ≠ Rₚ ist.

In einer weiteren Ausführungsform weist der Manschettendrücker senkrecht und parallel zu der Förderrichtung einen dreieckigen Querschnitt auf, wobei die Kontaktspitze des dreieckigen Querschnitts senkrecht zu der Förderrichtung ein Öffnungswinkel *α* aufweist, wobei die Kontaktspitze des dreieckigen Querschnitts parallel zu der Förderrichtung ein Öffnungswinkel *β* aufweist, wobei *α* ≠ *β* ist.

Mit anderen Worten unterscheidet sich der Querschnitt des Manschettendrückers senkrecht zu der Förderrichtung von dem Querschnitt parallel zu der Förderrichtung. Damit kann der Querschnitt des Manschettendrückers optimal an die unterschiedlichen Biegeeigenschaften der Schlauchmanschette in Förderrichtung bzw. senkrecht zu der Förderrichtung angepasst werden.

In einer weiteren Ausführungsform ist ein Antrieb zum Betätigen des Manschettendrückers in der Schließrichtung vorgesehen, wobei vorzugsweise der Antrieb ein pneumatischer Antrieb ist. Grundsätzlich sind jedoch beispielsweise auch manuelle Antriebe mittels eines Handrades oder ein hydraulischer als auch ein elektrischer Antrieb denkbar.

Insbesondere ist in einer Ausführungsform weiter eine Öffnung in dem Ventilgehäuse vorgesehen, über welche ein Druck in dem Ventilgehäuse einstellbar ist. Dies bietet den Vorteil, dass die Schlauchmanschette geschlossen werden kann, wenn der Antrieb vollständig ausfällt. Im Übrigen kann die Öffnung auch zur Anbringung verschiedener Sensoren, z.B. von Drucksensoren verwendet werden, die eine Leckage der Schlauchmanschette feststellen können. Insbesondere kann über die Öffnung auch ein Vakuum im Ventilgehäuse erzeugt werden, welches dem Aufziehen der Schlauchmanschette dient.

In einer weiteren Ausführungsform sind der Antrieb und der Manschettendrücker in dem Ventilgehäuse angeordnet, wobei vorzugsweise das Ventilgehäuse gasdicht ausgestaltet ist. Dies ist insbesondere von Vorteil, wenn der Antrieb ein pneumatischer Antrieb ist. Eine gasdichte Ausgestaltung hat weiterhin den Vorteil, dass das erfindungsgemäße Ventil auch für Vakuumanwendungen geeignet ist und eine Leckage der Schlauchmanschette leicht detektiert werden kann. Aufgrund der gasdichten Ausgestaltung wird die Schließmechanik des Quetschventils durch ein Vakuum, welches das Quetschventil umgibt, nicht beeinträchtigt. Eine Leckage zeigt sich weiter durch eine Druckveränderung in dem Ventilgehäuse und kann damit mittels einfacher Sensoren erfasst werden.

Insbesondere wird das Ventilgehäuse in einer Ausführungsform aus Metall, vorzugsweise aus Aluminium oder Edelstahl und am besten aus einem Kokillenguss oder einem Edelstahlguss hergestellt. Es versteht sich, dass jedoch je nach Anwendungsprofil des Quetschventils auch ein Spritzgussverfahren zur Herstellung eines Quetschventils aus Kunststoff denkbar ist.

In einer weiteren Ausführungsform weist der Manschettendrücker zumindest abschnittsweise eine Beschichtung auf, die auf einer Kontaktfläche des Manschettendrückers angeordnet ist, die mit der Schlauchmanschette in Kontakt kommt. Die Beschichtung, die beispielsweise eine PTFE- oder eine Teflonbeschichtung ist, bietet den Vorteil, dass die Haftreibung zwischen Manschettendrücker und Schlauchmanschette verringert wird und damit eine Beschädigung der Schlauchmanschette zusätzlich verringert wird. Des Weiteren wird die Schließkraft verringert, wenn die Haftreibung reduziert wird.

In einer weiteren Ausführungsform weist das Ventilgehäuse zwischen dem Ventileinlass und dem Ventilauslass einen Hohlraum auf, indem die Schlauchmanschette angeordnet ist, wobei der Hohlraum von einer Gehäusewand begrenzt wird, wobei die Gehäusewand eine Mehrzahl von Rippen, vorzugsweise mindestens 4 und höchstens 10 Rippen, aufweist, die sich senkrecht zu der Förderrichtung von der Gehäusewand in Richtung der Schlauchmanschette in den Hohlraum erstrecken, wobei besonders bevorzugt eine Gesamtlänge der Rippen in der Förderrichtung mindestens 35 %, vorzugsweise mindestens 40 % einer Gesamtlänge des Hohlraums in der Förderrichtung entspricht. Ein Abstand zwischen zwei benachbarten Rippen beträgt dabei vorzugsweise mindestens 4 mm und höchstens 20 mm.

Die Rippen ermöglichen eine druckstabile Lagerung der Schlauchmanschette in dem Hohlraum des Ventilgehäuses. Gleichzeitig verhindern die Rippen bei höheren Betriebsdrücken des Fördermediums ein Aufblasen oder Aufblähen der Schlauchmanschette in dem Hohlraum des Ventilgehäuses und reduzieren somit unnötige Belastungen der Schlauchmanschette während des Quetschventilbetriebes.

Die Rippen des Ventilgehäuses sind daher in einer Ausführungsform derart ausgestaltet, dass der Abstand der Rippen in Förderrichtung so klein ausgeführt wird, dass ein Aufblasen oder Aufblähen der Schlauchmanschette nicht möglich ist. Insbesondere sind alle Kanten der Rippen abgerundet, damit eine Beschädigung der Schlauchmanschette verhindert wird.

Des Weiteren begünstigen die Rippen die Herstellung des erfindungsgemäßen Quetschventils, da die Wände des Ventilgehäuses bei gleichbleibender Stabilität schlanker ausgestaltet werden können und somit eine Anhäufung von Material und potentielle Lunker als auch Undichtigkeiten im Gussgefüge verhindert werden.

Die der Erfindung zugrundeliegenden Aufgabe wird weiterhin durch ein Verfahren zur Herstellung eines Quetschventils gelöst, wobei das Quetschventil ein Ventilgehäuse aufweist, wobei das Ventilgehäuse einen Ventileinlass und einen Ventilauslass sowie eine zwischen dem Ventileinlass und dem Ventilauslass angeordnete Schlauchmanschette aufweist, wobei die Schlauchmanschette mit dem Ventileinlass und dem Ventilauslass verbunden ist und einen Ventilkanal bildet, der in einer Förderrichtung von einem Fördermedium durchflossen werden kann, wobei das Schlauchquetschventil weiter einen in einer Schließrichtung hin und her bewegbaren Manschettendrücker aufweist, wobei der Manschettendrücker derart in Kontakt mit der Schlauchmanschette steht, dass mit dem Manschettendrücker in der Schließrichtung eine Schließkraft auf die Schlauchmanschette ausübbar ist, sodass ein Kanalquerschnitt des Ventilkanals senkrecht zu der Förderrichtung zwischen dem Ventileinlass und dem Ventilauslass verringerbar und/oder verschließbar ist, wobei, die Schlauchmanschette zumindest zwei Materiallagen aufweist, zwischen denen ein erstes textiles Flächengebilde, vorzugsweise ein Gewebe, angeordnet ist und die Schlauchmanschette in einem Wickelverfahren hergestellt wird.

Ein Wickelverfahren bietet eine kostengünstige Herstellungsmöglichkeit für die mehrlagige Schlauchmanschette. Insbesondere können mehrere Schlauchmanschetten in einem Herstellungsverfahren hergestellt werden, indem die textilen Flächengebilde entlang einer Längsachse eines Schlauchmanschettenrohlings, die der späteren Förderrichtung entspricht, zueinander beabstandet entsprechend der Länge der späteren Schlauchmanschette angeordnet werden. Nachdem der Schlauchmanschettenrohling in dem Wickelverfahren hergestellt wurde, wird der Schlauchmanschettenrohling in mehrere Abschnitte geteilt, die die eigentliche Schlauchmanschette für das erfindungsgemäße Quetschventil darstellen.

Darüber hinaus bietet das Wickelverfahren eine hohe Flexibilität in der Gestaltung von Seele und Decke als auch der Einbringung der verschiedenen textilen Flächengebilde.

Es versteht sich, dass mit dem Verfahren zur Herstellung eines Quetschventils insbesondere ein Quetschventil nach einer der vorhergehend beschriebenen Ausführungsform hergestellt wird. Insbesondere wird in einer Ausführungsform des erfindungsgemäßen Verfahrens das Ventilgehäuse in einem Gussverfahren aus Metall oder Kunststoff hergestellt. Dadurch kann das erfindungsgemäße Quetschventil besonders stabil und mit geringem Gewicht hergestellt werden.

Weitere Vorteile, Merkmale und Anwendungsmöglichkeiten der vorliegenden Erfindung werden anhand der folgenden Beschreibung verschiedener Ausführungsformen sowie der dazugehörigen Figuren deutlich. Gleiche Bauteile sind mit gleichen Bezugszeichen versehen.
- Figur 1a: zeigt eine schematische Darstellung eines Querschnitts parallel zu der Förderrichtung durch eine erste Ausführungsform der vorliegenden Erfindung.
- Figur 1b: zeigt eine Vergrößerung des Bereichs der Schlauchmanschette, die in Figur 1a dargestellt ist.
- Figur 2: zeigt einen Querschnitt senkrecht zu der Förderrichtung der in den Figuren 1a und 1b dargestellten Ausführungsform des erfindungsgemäßen Quetschventils.
- Figur 3: zeigt einen Querschnitt senkrecht zur Förderrichtung für eine zweite Ausführungsform des erfindungsgemäßen Quetschventils.
- Figur 4a: zeigt einen Querschnitt senkrecht zur Förderrichtung für einen teilweise geschlossenen Zustand der in Figur 3 gezeigten Ausführungsform des Quetschventils.
- Figur 4b: zeigt einen Querschnitt parallel zur Förderrichtung für einen teilweise geschlossenen Zustand der in Figur 3 gezeigten Ausführungsform des Quetschventils.
- Figur 5: zeigt einen Teilquerschnitt senkrecht zur Förderrichtung einer dritten Ausführungsform des erfindungsgemäßen Quetschventils.
- Figur 6: zeigt eine dreidimensionale Außenansicht der in Figur 5 gezeigten Ausführungsform des erfindungsgemäßen Quetschventils.

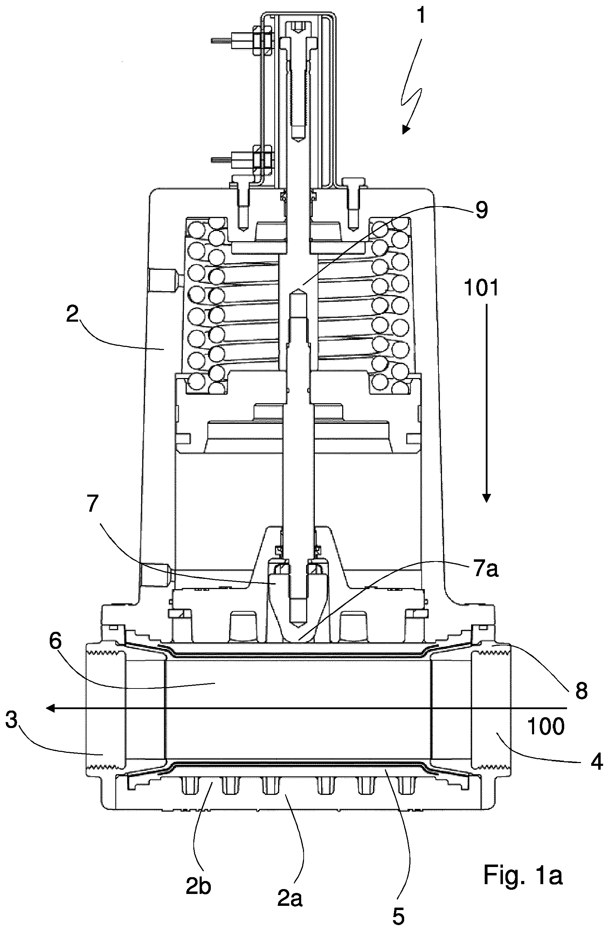

Die in Figur 1a gezeigte Ausführungsform des erfindungsgemäßen Quetschventils 1 weist ein Ventilgehäuse 2 auf, wobei das Ventilgehäuse 2 einen Ventileinlass 3 und einen Ventilauslass 4 sowie eine zwischen dem Ventileinlass 3 und dem Ventilauslass 4 angeordnete Schlauchmanschette 5 aufweist. Die Schlauchmanschette 5 verbindet den Ventileinlass 3 mit dem Ventilauslass 4 und bildet einen Ventilkanal 6, der in der Förderrichtung 100 von einem Fördermedium durchflossen werden kann.

Die Schlauchmanschette 5 ist in einem Hohlraum des Ventilgehäuses 2 gelagert, wobei das Ventilgehäuse Rippen 2b aufweist, die sich von der Gehäusewand 2a aus in Richtung des Hohlraums erstrecken und auf denen die Schlauchmanschette 5 gelagert ist.

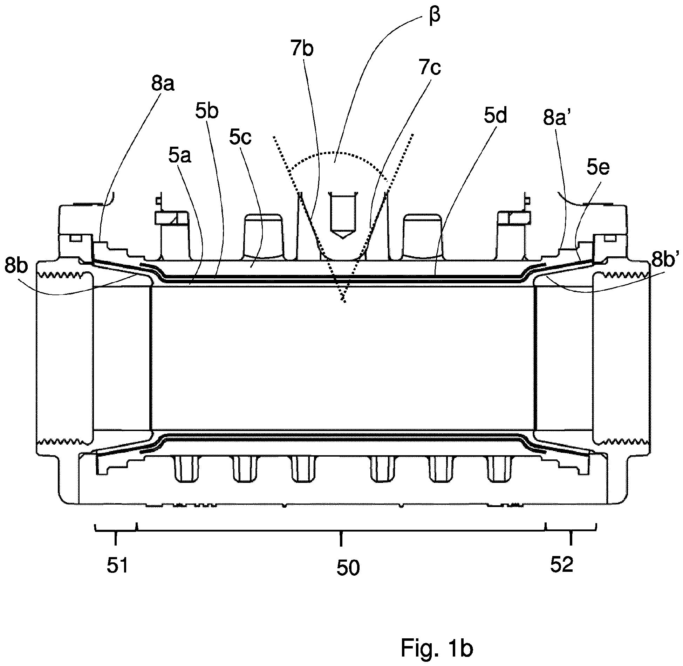

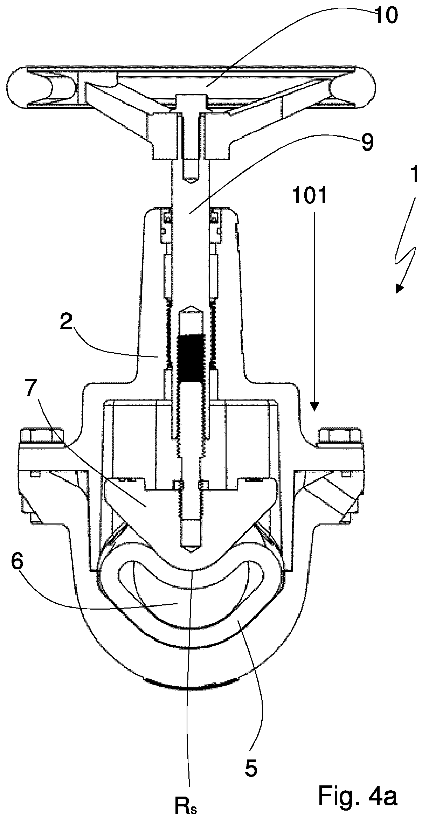

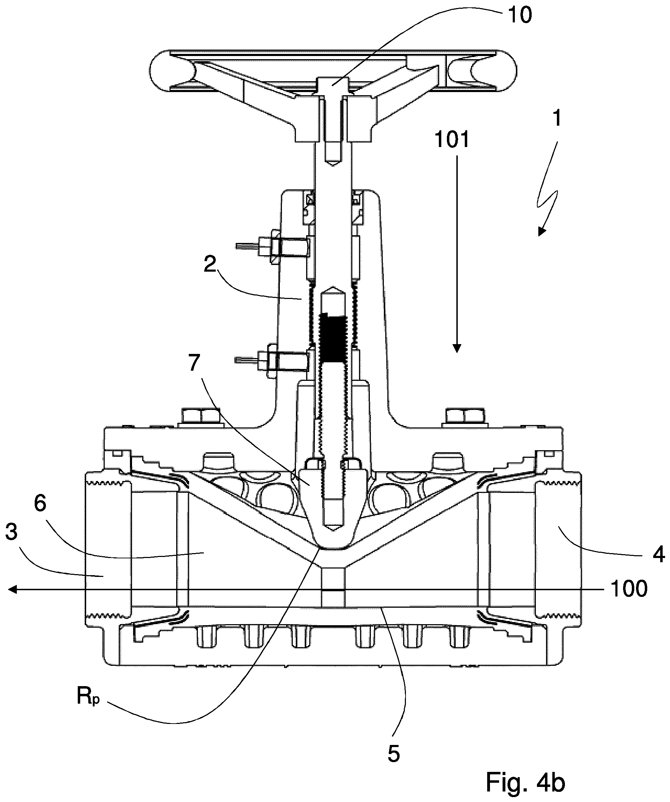

Um das Quetschventil 1 in einer Schließrichtung 101 senkrecht zu der Förderrichtung 100 zu schließen, weist das Quetschventil 1 einen zwischen einer Öffnungsposition und einer Schließposition hin und her bewegbaren Manschettendrücker 7 auf, wobei der Manschettendrücker 7 zumindest in der Schließposition derart in Kontakt mit der Schlauchmanschette 5 steht, dass mit dem Manschettendrücker 7 in der Schließrichtung 101 eine Schließkraft auf die Schlauchmanschette 5 ausgeübt wird. Bei den in den Figuren 1 bis 3 dargestellten Ausführungsformen befindet sich der Manschettendrücker in der Öffnungsposition, in welcher keine Kraft auf die Schlauchmanschette 5 ausgeübt wird. Die Figuren 4a und 4b zeigen hingegen einen Zustand, in welchem der Manschettendrücker 7 eine Schließkraft auf die Schlauchmanschette 5 ausübt. Die Schlauchmanschette 5 ist entsprechend gequetscht und ein Querschnitt des Ventilkanals 6 verringert.

Wie in Figur 1b im Detail dargestellt, weist die Schlauchmanschette 5 eine erste Materiallage 5a, eine zweite Materiallage 5b sowie eine dritte Materiallage 5c auf, wobei die erste Materiallage 5a direkt an den Ventilkanal 6 angrenzt und die dritte Materiallage 5c am weitesten von dem Ventilkanal 6 entfernt ist. Zwischen der dritten Materiallage 5c und der zweiten Materiallage 5b ist ein erstes textiles Flächengebilde 5d angeordnet und zwischen der zweiten Materiallage 5b und der ersten Materiallage 5c ein zweites textiles Flächengebilde 5e.

Weiter ist die Schlauchmanschette 5 in einen Zentralabschnitt 50 und einen ersten und einen zweiten Endabschnitt 51,52 unterteilt, die in Förderrichtung 100 hintereinander angeordnet sind. Dabei ist der erste Endabschnitt 51 der Schlauchmanschette 5 zwischen zwei Einspannflächen 8a, 8b einer Einspannvorrichtung 8 mit dem Ventileinlass 3 verbunden. Weiter ist der zweite Endabschnitt 52 zwischen zwei Einspannflächen 8a` und 8b` der Einspannvorrichtung 8 mit dem Ventilauslass 4 verbunden. Wie ebenfalls in Figur 1b deutlich wird, erstreckt sich das erste textile Flächengebilde 5d nicht bis in den ersten Endabschnitt 51 und nicht bis in den zweiten Endabschnitt 52. Im Gegensatz dazu erstreckt sich das zweite textile Flächengebilde 5e sowohl in den ersten Endabschnitt 51 als auch in den zweiten Endabschnitt 52, sodass das zweite textile Flächengebilde 5e zwischen den Einspannflächen 8a, 8b bzw. 8a`, 8b` eingeklemmt ist, während die Einspannflächen 8a, 8b, 8a`, 8b` nur einen Randabschnitt des Zentrallabschnittes 50 und damit des ersten textilen Flächengebildes 5d einklemmen.

Dies führt dazu, dass eine Schließkraft, die von dem Manschettendrücker 7 auf die Schlauchmanschette 5 zum Schließen des Quetschventils 1 ausgeübt werden muss, im Vergleich zu einer Ausführungsform, in welcher sich das erste textile Flächengebilde bis in die Einspannvorrichtung 8 erstrecken würde, reduziert ist.

Weiter kann den dargestellten Querschnitten die Form des Manschettendrückers 7 senkrecht und parallel zu der Förderrichtung 100 entnommen werden, die die Schließkraft des erfindungsgemäßen Quetschventils weiter verringert.

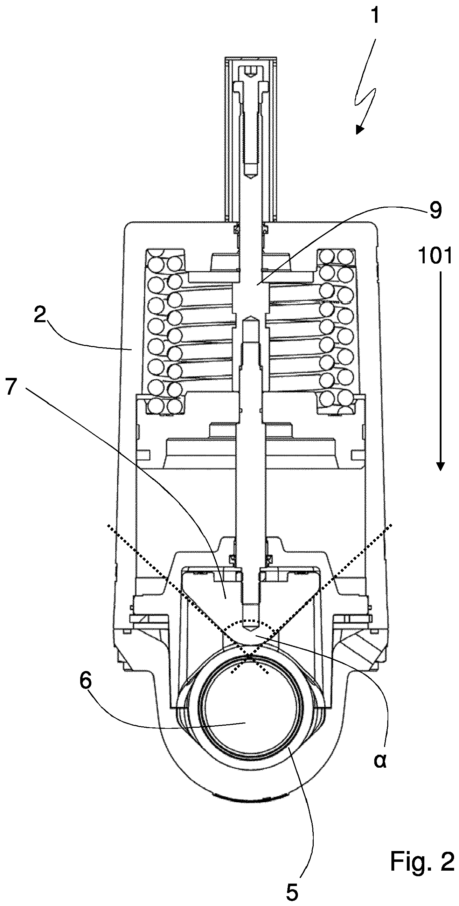

Im Querschnitt senkrecht zu der Förderrichtung (siehe Figuren 2, 3 und 4a) weist der Manschettendrücker einen dreieckigen Querschnitt auf, wobei der dreieckige Querschnitt so orientiert ist, dass eine Kontaktspitze 7a der drei Spitzen des dreieckigen Querschnitts in Schließrichtung 101 zeigt. Die Kontaktspitze 7a ist mit einem Radius Rₛ von 15 mm in einer Richtung senkrecht zu der Förderrichtung abgerundet. Ein Öffnungswinkel *α* in einer Ebene senkrecht zu der Förderrichtung an der Kontaktspitze 7a des dreieckigen Querschnitts beträgt 90°.

Zudem ist aus dem in Figur 1b gezeigten Längsschnitt entlang der Förderrichtung 100 erkenntlich, dass der Manschettendrücker 7 auch parallel zu der Förderrichtung 100 einen Querschnitt aufweist, der sich in Schließrichtung 101 verjüngt. Verlängert man die Seiten des Querschnitts des Manschettendrückers gedanklich (siehe gestrichelte Linien in Figur 1b), so können diese von einem Dreieck mit einem Öffnungswinkel β von 42° beschrieben werden. Aus dem in Figur 1b gezeigten Längsschnitt ist weiter ersichtlich, dass die Kontaktspitze 7a abgeflacht ist und eine Kontaktfläche bildet, die senkrecht zu der Schließrichtung 101 steht. Die Kontaktfläche geht mit einem Rundungsradius Rₚ von jeweils 21° in die Seitenflächen 7b, 7c des Manschettendrückers über.

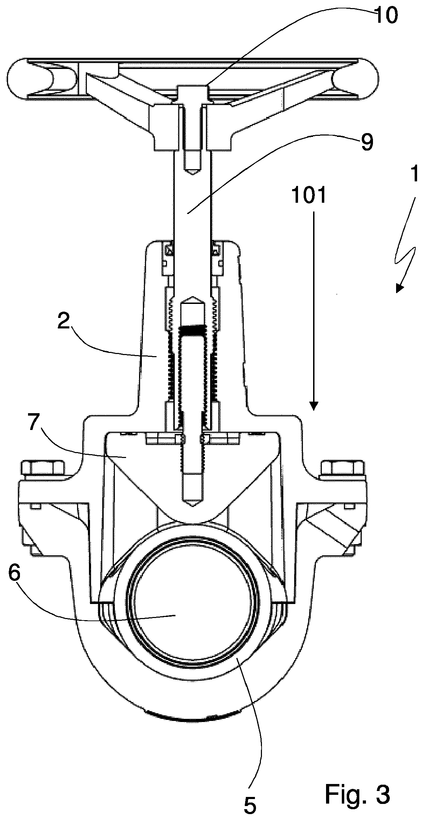

Um den Manschettendrücker 7 in Schließrichtung 101 zu bewegen, ist bei der in den Figuren 1a sowie 2 gezeigten Ausführungsform ein Antrieb 9 vorgesehen, der den Manschettendrücker 7 in Schließrichtung 101 auf die Schlauchmanschette 5 zubewegt. Der Antrieb 9 ist dabei im Ventilgehäuse 2 des Quetschventils 1 angeordnet. Im Gegensatz dazu ist in den Figuren 3, 4a und 4b ein Handantrieb mittels eines Handrades 10 dargestellt, wobei das Handrad 10 aus dem Ventilgehäuse 2 zur Betätigung hinausragt.

Das in den Figuren dargestellte Ventilgehäuse ist in einem Kokillenguss und Feingussverfahren hergestellt und ist gasdicht ausgeführt. Weiter ist die Schlauchmanschette 5 in einem Wickelverfahren hergestellt.

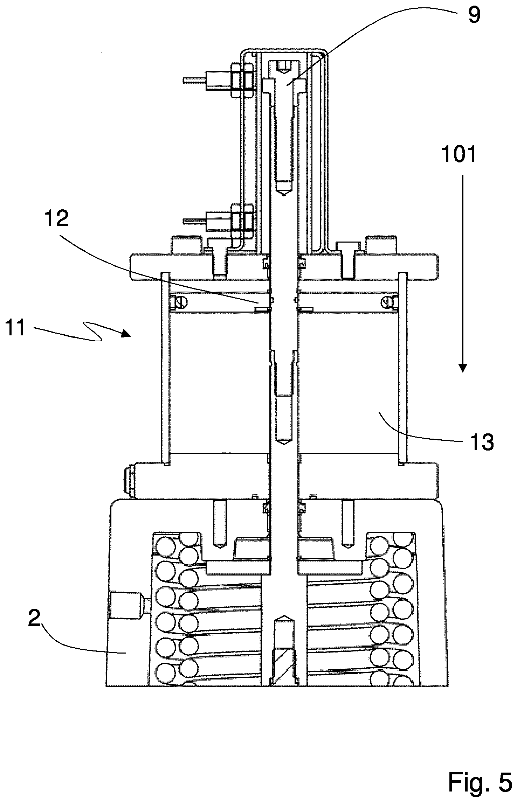

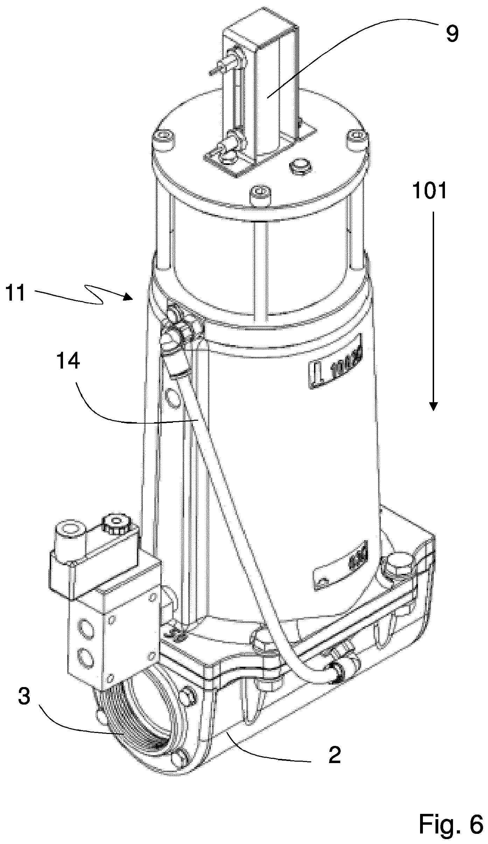

Die in den Figuren 5 und 6 gezeigte dritte Ausführungsform des erfindungsgemäßen Quetschventils 1 entspricht im Wesentlichen der Ausführungsform, die in den Figuren 1a und 2 gezeigt ist. Allerdings weist das Quetschventil 1 eine zusätzliche Manschettenaufzieheinheit 11 auf, mit welcher die Schlauchmanschette 5 aktiv in eine geöffnete Position aufgezogen wird. Zu diesem Zweck ist ein Kolben 12 der Manschettenaufzieheinheit 11 mit dem Antrieb 9 verbunden, sodass eine Bewegung des Kolbens 12 der Manschettenaufzieheinheit 11 mit einer Bewegung des Antriebes 9 gekoppelt ist.

Bewegt der Antrieb 9 den Manschettendrücker 7 in die Öffnungsposition, wird durch die Bewegung des Kolbens 12 ein Unterdruck in einer Kammer 13 der Manschettenaufzieheinheit 11 erzeugt. Die Kammer 13 ist mit dem Hohlraum des Ventilgehäuses 2 über eine Leitung 14 verbunden, sodass hierdurch ein Unterdruck in dem Hohlraum des Ventilgehäuses 2 erzeugt und die Schlauchmanschette 5 so aufgezogen wird.

Dies ist von Vorteil, wenn in dem Ventilkanal 6 beispielsweise ein Vakuum hergestellt ist, um das Fördermedium zu transportieren. Dann wirkt die Kraft des Unterdrucks, welchen die Manschettenaufzieheinheit 11 in dem Hohlraum erzeugt der Kraft des Vakuums im Ventilkanal 6 entgegen, sodass die Schlauchmanschette 5 nach dem Verschließen wieder vollständig geöffnet werden und das Fördermedium ungehindert passieren kann.

### Bezugszeichen

- 1: Quetschventil
- 2: Ventilgehäuse
- 2a: Gehäusewand
- 2b: Rippen
- 3: Ventileinlass
- 4: Ventilauslass
- 5: Schlauchmanschette
- 5a: erste Materiallage
- 5b: zweite Materiallage
- 5c: dritte Materiallage
- 5d: erstes textiles Flächengebilde
- 5e: zweites textiles Flächengebilde
- 6: Ventilkanal
- 7: Manschettendrücker
- 7a: Kontaktspitze
- 7b, 7c: Seitenflächen des Manschettendrückers
- 8: Einspannvorrichtung
- 8a, 8b, 8a`, 8b`: Einspannflächen
- 9: Antrieb
- 10: Handrad
- 11: Manschettenaufzieheinheit
- 12: Kolben
- 13: Kammer
- 14: Leitung
- 50: Zentralabschnitt
- 51: erster Endabschnitt
- 52: zweiter Endabschnitt
- 100: Förderrichtung
- 101: Schließrichtung

## Patentansprüche

1. Quetschventil (1) mit einem Ventilgehäuse (2), wobei das Ventilgehäuse (2) einen Ventileinlass (3) und einen Ventilauslass (4) sowie eine zwischen dem Ventileinlass (3) und dem Ventilauslass (4) angeordnete Schlauchmanschette (5) aufweist, wobei die Schlauchmanschette (5) mit dem Ventileinlass (3) und dem Ventilauslass (4) verbunden ist und einen Ventilkanal (6) bildet, der in einer Förderrichtung (100) von einem Fördermedium durchflossen werden kann, wobei das Quetschventil (1) weiter einen in einer Schließrichtung (101) zwischen einer Öffnungsposition und einer Schließposition hin und her bewegbaren Manschettendrücker (7) aufweist, wobei der Manschettendrücker (7) zumindest in der Schließposition derart in Kontakt mit der Schlauchmanschette (5) steht, dass mit dem Manschettendrücker (7) in der Schließrichtung eine Schließkraft auf die Schlauchmanschette (5) ausgeübt wird, sodass ein Kanalquerschnitt des Ventilkanals (6) senkrecht zu der Förderrichtung (100) zwischen dem Ventileinlass (3) und dem Ventilauslass (4) verringerbar und/oder verschließbar ist, **dadurch gekennzeichnet, dass** die Schlauchmanschette (5) zumindest zwei Materiallagen (5a, 5b) aufweist, zwischen denen ein erstes textiles Flächengebilde (5d), vorzugsweise ein Gewebe, angeordnet ist.

2. Quetschventil (1) nach dem vorhergehenden Anspruch, wobei das Quetschventil (1) weiter eine Manschettenaufzieheinheit (11) für die Schlauchmanschette (5) aufweist, wobei das Ventilgehäuse (2) gasdicht ausgestaltet ist, wobei die Manschettenaufzieheinheit (11) derart ausgestaltet ist, dass mit der Manschettenaufzieheinheit (11) in dem Ventilgehäuse (2) ein Unterdruck erzeugbar ist, sodass die Schlauchmanschette (5) gegen eine Gehäusewand (2a) des Ventilgehäuses (2) gezogen und der Kanalquerschnitt vergrößert wird.

3. Quetschventil (1) einem der vorhergehenden Ansprüche, wobei die Schlauchmanschette (5) einen Zentralabschnitt (50) und einen ersten und einen zweiten Endabschnitt (51, 52), die in Förderrichtung (100) hintereinander angeordnet sind, aufweist, wobei das erste textile Flächengebilde (5d) sich nicht bis in den ersten Endabschnitt (51) und vorzugsweise auch nicht bis in den zweiten Endabschnitt (52) erstreckt, wobei eine Einspannvorrichtung (8) mit zwei Einspannflächen (8a, 8b, 8a`, 8b`) vorgesehen ist, mit der die Schlauchmanschette (5) an dem Ventileinlass (3) und/oder dem Ventilauslass (4) derart befestigt ist, dass der erste Endabschnitt (51) zwischen den zwei Einspannflächen (8a, 8b) geklemmt ist, wobei besonders bevorzugt der Zentralabschnitt (50) nicht oder nur ein Randabschnitt des Zentralabschnitts (50) zwischen den Einspannflächen (8a, 8b. 8a`. 8b`) geklemmt ist.

4. Quetschventil (1) nach Anspruch 3, wobei die Einspannvorrichtung (8) einen konusförmigen Abschnitt aufweist, wobei sich ein Durchmesser des konusförmigen Abschnitts zu einem Inneren des Ventilkanals (6) hin verjüngt, wobei eine Außenfläche des konusförmigen Abschnitts eine erste der zwei Einspannflächen (8a, 8b) bildet, die mit der Förderrichtung (100) einen Winkel von mindestens 10° und höchstens 35° einschließt und wobei der konusförmige Abschnitt derart ausgestaltet ist, dass der konusförmige Abschnitt eine Wand der Schlauchmanschette (5) gegen eine zweite der zwei Einspannflächen (8a, 8b), die in dem Ventilgehäuses angeordnet ist, drückt.

5. Quetschventil (1) nach einem der vorhergehenden Ansprüche, wobei die Schlauchmanschette (5) zumindest eine erste (5a), eine zweite (5b) und eine dritte (5c) Materiallage, sowie ein zweites textiles Flächengebilde (5e), vorzugsweise ein Gewebe, aufweist, wobei das erste textile Flächengebilde (5d) zwischen der zweiten und dritten Materiallage und das zweite textile Flächengebilde (5e) zwischen der ersten und zweiten Materiallage angeordnet ist, wobei vorzugsweise die erste Materiallage (5a) an den Ventilkanal (6) angrenzt, die zweite Materiallage (5b) weiter entfernt von dem Ventilkanal (6) angeordnet ist als die erste Materiallage (5a) und die dritte Materiallage (5c) weiter entfernt von dem Ventilkanal (6) angeordnet ist als die zweite Materiallage (5b), wobei sich besonders bevorzugt das zweite textile Flächengebilde (5e) in den ersten Endabschnitt (51) und besonders bevorzugt in den zweiten Endabschnitt (52) erstreckt.

6. Quetschventil (1) nach einem der vorhergehenden Ansprüche, wobei der Manschettendrücker (7) senkrecht und/oder parallel zu der Förderrichtung (100) einen Querschnitt aufweist, der sich in der Schließrichtung (101) verjüngt.

7. Quetschventil (1) nach Anspruch 6, wobei der Manschettendrücker (7) senkrecht und/oder parallel zu der Förderrichtung (100) zumindest abschnittsweise einen dreieckigen Querschnitt aufweist, wobei der dreieckige Querschnitt so orientiert ist, dass eine Kontaktspitze (7a) der drei Spitzen des dreieckigen Querschnitts in Schließrichtung (101) zeigt, wobei die Kontaktspitze (7a) vorzugsweise mit einem Radius abgerundet ist.

8. Quetschventil (1) nach Anspruch 7, wobei ein Radius Rₛ der Kontaktspitze (7a) des dreieckigen Querschnitts senkrecht zu der Förderrichtung (100) mindestens 5 mm und höchstens 20 mm, vorzugsweise mindestens 7 mm und höchstens 18 mm, beträgt und/oder wobei ein Radius Rₚ der Kontaktspitze (7a) des dreieckigen Querschnitts parallel zu der Förderrichtung (100) mindestens 2 mm und höchstens 10 mm, vorzugsweise mindestens 3 mm und höchstens 7 mm, beträgt.

9. Quetschventil (1) nach einem der Ansprüche 7 oder 8, wobei ein Öffnungswinkel α an der Kontaktspitze (7a) des dreieckigen Querschnitts senkrecht zu der Förderrichtung (100) mindestens 85° und höchstens 95° beträgt und/oder wobei ein Öffnungswinkel β an der Kontaktspitze (7a) des dreieckigen Querschnitts parallel zu der Förderrichtung (100) mindestens 35° und höchstens 65° beträgt.

10. Quetschventil (1) nach einem der Ansprüche 7 bis 9, wobei der Manschettendrücker (7) senkrecht und parallel zu der Förderrichtung (100) einen dreieckigen Querschnitt aufweist, wobei die Kontaktspitze (7a) des dreieckigen Querschnitts senkrecht zu der Förderrichtung (100) einen Radius Rₛ aufweist, wobei die Kontaktspitze (7a) des dreieckigen Querschnitts parallel zu der Förderrichtung (100) einen Radius Rₚ aufweist, wobei Rₛ ≠ Rₚ ist.

11. Quetschventil (1) nach einem der Ansprüche 7 bis 10, wobei der Manschettendrücker (7) senkrecht und parallel zu der Förderrichtung (100) einen dreieckigen Querschnitt aufweist, wobei die Kontaktspitze (7a) des dreieckigen Querschnitts senkrecht zu der Förderrichtung (100) einen Öffnungswinkel α aufweist, wobei die Kontaktspitze (7a) des dreieckigen Querschnitts parallel zu der Förderrichtung (100) einen Öffnungswinkel β aufweist, wobei α ≠ β ist.

12. Quetschventil (1) nach einem der vorhergehenden Ansprüche, wobei ein Antrieb (9) zum Betätigen des Manschettendrückers (7) in der Schließrichtung (101) vorgesehen ist, wobei vorzugsweise der Antrieb (9) ein pneumatischer Antrieb ist, wobei besonders bevorzugt eine Öffnung in dem Ventilgehäuse (2) vorgesehen ist, über welche ein Druck in dem Ventilgehäuse (2) einstellbar ist.

13. Quetschventil (1) nach einem der vorhergehenden Ansprüche, wobei der Manschettendrücker (7) zumindest abschnittsweise eine Beschichtung aufweist, die auf einer Kontaktfläche des Manschettendrückers (7) angeordnet ist, die mit der Schlauchmanschette (5) in Kontakt kommt.

14. Quetschventil (1) nach einem der vorhergehenden Ansprüche, wobei das Ventilgehäuse (2) zwischen dem Ventileinlass (3) und dem Ventilauslass (4) einen Hohlraum aufweist, in dem die Schlauchmanschette (5) angeordnet ist, wobei der Hohlraum von einer Gehäusewand (2a) begrenzt wird, wobei die Gehäusewand (2a) eine Mehrzahl von Rippen (2b), vorzugsweise mindestens 4 und höchstens 10 Rippen, aufweist, die sich senkrecht zu der Förderrichtung (100) von der Gehäusewand (2a) in Richtung der Schlauchmanschette (5) in den Hohlraum erstrecken, wobei besonders bevorzugt eine Gesamtlänge der Rippen (2b) in der Förderrichtung (100) mindestens 35 %, vorzugsweise mindestens 40 % einer Gesamtlänge des Hohlraums in der Förderrichtung (100) entspricht.

15. Verfahren zur Herstellung eines Quetschventils (1) mit einem Ventilgehäuse (2), wobei das Ventilgehäuse (2) einen Ventileinlass (3) und einen Ventilauslass (4) sowie eine zwischen dem Ventileinlass (3) und dem Ventilauslass (4) angeordnete Schlauchmanschette (5) aufweist, wobei die Schlauchmanschette (5) mit dem Ventileinlass (3) und dem Ventilauslass (4) verbunden ist und einen Ventilkanal (6) bildet, der in einer Förderrichtung (100) von einem Fördermedium durchflossen werden kann, wobei das Schlauchquetschventil (1) weiter einen in einer Schließrichtung (101) hin und her bewegbaren Manschettendrücker (7) aufweist, wobei der Manschettendrücker (7) derart in Kontakt mit der Schlauchmanschette (5) steht, dass mit dem Manschettendrücker (7) in der Schließrichtung (101) eine Schließkraft auf die Schlauchmanschette (5) ausübbar ist, sodass ein Kanalquerschnitt des Ventilkanals (6) senkrecht zu der Förderrichtung (100) zwischen dem Ventileinlass (3) und dem Ventilauslass (4) verringerbar und/oder verschließbar ist, **dadurch gekennzeichnet, dass** die Schlauchmanschette (5) zumindest zwei Materiallagen (5a, 5b) aufweist, zwischen denen ein erstes textiles Flächengebilde (5d), vorzugsweise ein Gewebe, angeordnet ist und die Schlauchmanschette (5) in einem Wickelverfahren hergestellt wird.
